# EUROPÄISCHE PATENTSCHRIFT

(11) **EP 1 619 386 B1**
(45) Veröffentlichungstag und Bekanntmachung des Hinweises auf die Patenterteilung: **16.09.2009**
(21) Anmeldenummer: 05106830.2
(22) Anmeldetag: 25.07.2005
(51) Int. Cl.: F03D 11/02

(54) **Windkraftgetriebe für eine Windkraftanlage höherer Leistung**
Transmission for high power wind generation installation
Transmission pour installation éolienne de haute puissance

(30) Priorität: 23.07.2004 DE 102004036005
(43) Veröffentlichungstag der Anmeldung: 25.01.2006
(73) Patentinhaber: LOHMANN & STOLTERFOHT GMBH, 58455 Witten (DE)
(72) Erfinder: Schäfer, Wilhelm Dr., 58452 Witten (DE); Steinberg, Hans, 58453 Witten (DE)
(74) Vertreter: Kietzmann, Lutz

(56) Entgegenhaltungen:
- EP-A- 1 167 755
- EP-A- 1 279 867
- WO-A-03/031811
- DE-A1- 4 329 495
- DE-A1- 4 430 443
- GB-A- 1 106 982
- NL-C- 22 178
- US-A- 2 014 138

## Beschreibung

Die vorliegende Erfindung betrifft ein mehrstufiges, leistungsverzweigtes Windkraftgetriebe in Stirnradbauweise, das zur Übersetzung ins Schnelle zwischen Rotor und Generator einer Windkraftanlage angeordnet ist, dessen Getriebestufen aus achsparallelen Außenradpaarungen mit schräg verzahnten Stirnrädern aufgebaut sind, wobei zur Leistungsverzweigung mehrere Zahnritzel mit einem rotorseitigen Zentralstirnrad größeren Durchmessers in Eingriff stehen, denen jeweils mindestens eine weitere Getriebestufe nachgeschaltet ist, welche die Leistung auf eine einzige generatorseitige Abtriebswelle zusammenführen.

Windkraftgetriebe sind spezielle Getriebe, welche aufgrund besonderer Belastungscharakteristika und dem Konstruktionsziel einer möglichst kompakten Bauform bei geringem Gewicht besonders hohe Konstruktionsanforderungen an den Fachmann stellen. Im kleineren Leistungsbereich von bis etwa 1 Megawatt kamen in der Vergangenheit oftmals Windkraftgetriebe in Stirnradbauweise zur Anwendung. Im größeren Leistungsbereich von 2 bis etwa 10 Megawatt werden bislang vorwiegend Windkraftgetriebe in Planetengetriebebauweise eingesetzt, welche meist aus zwei Planetenstufen in Kombination mit einer Stirnradstufe bestehen, um das geforderte Übersetzungsverhältnis von der Drehzahl des Rotors zu der für den Generator erforderlichen Drehzahl zu realisieren. Diese Getriebekonfiguration bedingt einen Achsversatz zwischen der antriebsseitigen Welle und der abtriebsseitigen Welle. Mit einer derartigen konstruktiven Lösung können recht kompakte und somit auch vergleichsweise leichte Windkraftgetriebe ausgeführt werden, was eine unbedingte Notwendigkeit für den Einbau des Windkraftgetriebes in eine Gondel einer Windkraftanlage in großer Höhe ist.

Bei den allgemein bekannten Windkraftgetrieben mit Planetenstufen hat sich in der Praxis der Bereich der Planeten als problematisch erwiesen. Dieser Bereich weist eine gravierende Schadensanfälligkeit auf. Der Grund für die Schadensanfälligkeit ist zu suchen im Doppeleingriff der Planeten, der einerseits gegeben ist durch den Eingriff der Planeten in das Sonnenrad und andererseits auf der diametralen Seite des Planeten durch den Eingriff in das Hohlrad. Dieser Eingriffszustand verursacht eine Wechselbiegung bei den im Eingriff befindlichen Zähnen des Planeten. Die Wechselbiegung ergibt eine Beanspruchungssitutation, die eine erhebliche Reduzierung der Zahnfußtragfähigkeit mit sich bringt, obwohl jeder Planet nur den einfachen Leistungsfluss überträgt, während Sonnenrad bzw. Hohlrad die Summe der Leistungsflüsse aller Planeten übernehmen. Da deren Zähne aber keine Wechselbiegung erfahren, wurde festgestellt, dass insbesondere die Planeten und deren Lagerung die große Schwachstelle im Planetengetriebesystem sind. Wegen der aus sehr stark schwankenden Windverhältnissen resultierenden Lastkollektive in Windkraftgetrieben führt diese Schwachstelle oftmals zu Getriebeschäden bei Windkraftgetrieben größerer Leistung.

Aus der NL 22178 C ist ein Stirnradgetriebe bekannt, bei welchem über mehrere Getriebestufen die Leistung ausgehend von einer Eingangswelle leistungsverzweigt auf eine Ausgangswelle übersetzt werden kann. Dabei sind die, die jeweiligen Stirnräder tragenden Wellen in Gehäusen gelagert.

Aus der gattungsgemäßen DE 101 34 245 A1 geht ein Windkraftgetriebe für größere Leistungen hervor, welches in Stimradbauweise aufgebaut ist. Das Windkraftgetriebe ist mehrstufig ausgeführt und bewerkstelligt die Übertragung größerer Leistungen mittels Leistungsverzweigung. Da hier von dem Konzept eines Planetengetriebes abgegangen wird, sind die hiermit in Verbindung stehenden und vorstehend erläuterten Probleme nicht vorhanden. Die Stirnradbauweise ist Voraussetzung dafür, dass das bekannte Windkraftgetriebe relativ robust ist.

Das bekannte Windkraftgetriebe besteht aus einem mit einer Außenverzahnung versehenen Großzahnrad, das von acht Ritzelwellen umgeben ist, deren Zahnritzel mit dem Großzahnrad kämmen: Die Ritzelwellen tragen je ein Zahnrad, wobei zwei Zahnräder jeweils ein Zahnradpaar bilden und wechselweise vor und hinter dem Großzahnrad angeordnet sind. Hierbei sind die Zahnräder mit einer Schrägverzahnung von unterschiedlicher Steigungsrichtung versehen. Die Zahnräder der acht Ritzelwellen stehen mit vier jeweils einem Zahnradpaar gemeinsamen, doppelt schräg verzahnten, axial frei gelagerten Ritzelwellen in Eingriff und bilden mit diesen eine Erststufe der Leistungsverzweigung. Die vier Ritzelwellen der ersten Stufe der Leistungsverzweigung stehen mit vier Ritzelwellen einer zweiten Stufe der Leistungsverzweigung in Verbindung. Die vier Ritzelwellen der zweiten Stufe der Leistungsverzweigung tragen wiederum je ein Zahnrad, wobei zwei Zahnräder ein Zahnradpaar bilden. Die Zahnräder eines Zahnradpaares sind mit einer Schrägverzahnung von unterschiedlicher Steigungsrichtung versehen und stehen mit zwei jeweils einem Zahnradpaar gemeinsamen doppeltschrägverzahnten, axial frei gelagerten Ritzelwellen in Eingriff. Hierüber kann der Abtrieb erfolgen. Nach einer weiteren Ausführungsform können die besagten Ritzelwellen über eine dritte Stufe der Leistungsverzweigung mit einer einzigen abtriebsseitigen Welle in Eingriff stehen.

Nachteilig bei diesem Windkraftgetriebe ist jedoch, dass recht viele einzelne Bauteile, insbesondere in Eingriff stehende Zahnradpaarungen, erforderlich sind. Hierdurch entstehen entsprechend viele Risikostellen, an denen aufgrund von fortschreitendem Verschleiß Schäden auftreten können. Darüber hinaus ist der Wirkungsgrad dieses Windkraftgetriebes aufgrund der durch die vielen Bauteile bedingten Reibungsstellen recht gering. Insbesondere erweisen sich die axialfrei, also schwimmend, gelagerten Ritzelwellen als problematisch. Denn ist die Windkraftanlage außer Betrieb, so dass der Rotor nicht läuft, pendelt dieser aufgrund von auf ihn durch Windschwankungen erzeugte pulsierende Kräfte hin und her. Dies verursacht entsprechende Lastwechsel im Windkraftgetriebe. Infolge dieser Lastwechsel bewegen sich die schwimmend gelagerten Ritzelwellen gemäß der Pendelfrequenz des Rotors ebenfalls axial hin und her. Da in diesem Zustand der Windkraftanlage das Schmierungssystem des Windkraftgetriebes nicht im Einsatz ist, wird vermehrt Reibkorrosion an den Zahnflanken der Zähne des Großzahnrads, sowie der Zähne der hiermit im Eingriff stehenden schwimmendend gelagerten Ritzelwellen verursacht. Andererseits ist die schwimmende Lagerung der Ritzelwellen aufgrund der Doppelschrägverzahnung erforderlich, um im Betrieb der Windkraftanlage einen optimalen Zahneingriff zu gewährleisten.

Es ist die Aufgabe der vorliegenden Erfindung, ein mehrstufiges, leistungsverzweigtes Windkraftgetriebe in Stirnradbauweise zu schaffen, welches unempfindlich hinsichtlich Lastwechselbeanspruchungen ist und gleichzeitig eine kraftflussoptimale Leistungsverzweigung gewährleistet.

Die Aufgabe wird ausgehend von einem mehrstufigen, leistungsverzweigten Windkraftgetriebe gemäß dem Oberbegriff von Anspruch 1 in Verbindung mit dessen kennzeichnenden Merkmalen gelöst. Im Hinblick auf einen Antriebsstrang einer Windkraftanlage höherer Leistung wird die Aufgabe durch Anspruch 15 gelöst. Die jeweils rückbezogenen abhängigen Ansprüche geben vorteilhafte Weiterbildungen der Erfindung wieder.

Die Erfindung schließt die technische Lehre ein, dass sämtliche Stirnräder einfach schrägverzahnt sind und die Lagerung der die Stirnräder tragenden Wellen derart getrennt ausgeführt ist, dass neben einer mindestens zweifachen Radiallagerung auch Mittel zur Axiallagerung der Wellen vorgesehen sind. Damit versteht es sich von selbst, dass auch die mit den schrägverzahnten Stirnrädern in Eingriff stehenden Ritzel einfach schrägverzahnt sind.

Der Vorteil der erfindungsgemäßen Lösung liegt insbesondere darin, dass die auf die rotorseitige Welle einwirkenden Lastwechsel nicht zur Reibung an Zahnflanken in der erste Getriebestufe führen. Die erfinderische Leistung beruht hier insbesondere auch darauf, dass die Ursachen der Probleme des Standes der Technik analysiert und erkannt worden sind und durch die erfindungsgemäßen Maßnahmen gezielt behoben werden. Dagegen würde der normale Fachmann vor dem Hintergrund der bestehenden Probleme gewöhnlich größer dimensionieren oder durch eine entsprechende Materialauswahl reagieren.

Die Lagerung der Wellen kann nach zwei bevorzugten Alternativen vorgenommen werden. Zum einen ist es möglich, die Radiallagerung über jeweils mindestens ein Radiallager pro Welle auszuführen, wogegen als Mittel zur Axiallagerung jeweils mindestens ein entlang der jeweiligen Welle beabstandet hierzu angeordnetes kombiniertes Radial-/Axiallager vorgesehen werden kann. Bei dieser Variante sind lediglich zwei Lager pro Welle erforderlich.

Alternativ hierzu ist es jedoch auch möglich, die Radiallagerung über jeweils mindestens zwei entlang der Wellen zueinander beabstandet angeordnete reine Radiallager auszuführen, wogegen als Mittel zur Axiallagerung jeweils mindestens ein stirnseitig der Wellen angeordnetes reines Axiallager vorgesehen werden kann. Diese Variante erweist sich wegen der klaren Trennung der Lagerfunktionen als ganz besonders stabil.

Vorzugsweise reichen zur Übertragung einer Leistung im Bereich von 4 bis 6 Megawatt eine Anzahl von 2 bis 3 Zahnritzeln die mit dem rotorseitigen Zentralstirnrad im Eingriff stehen, um eine hinreichende Leistungsverzweigung zu gewährleisten. Es hat sich erwiesen, dass beispielsweise für eine Leistung von 4,5 Megawatt eine Leistungsverzweigung mittels zweier Zahnritzel, also zwei parallele Leistungszweige, hinreichend sind. Im Gegensatz zum Stand der Technik sind also eine weitaus geringere Anzahl einzelner Zahnräder erforderlich, was die Risikostellen für etwaige Schäden entsprechend reduziert.

Ebenfalls bevorzugt ist zur Übertragung einer Leistung im Bereich von 4 bis 6 Megawatt mit 3 bis 4 Getriebestufen ein Gesamtübersetzungsverhältnis im Bereich von 60 bis 120 realisierbar ganz, vorzugsweise ist ein Gesamtübersetzungsverhältnis bei dieser Bauform von 70 bis 100 darstellbar. Diese Getriebekonfiguration stellt ebenfalls ein Optimum im Hinblick auf die hierfür erforderlichen Einzelbauteile, insbesondere Zahnräder und Lager, dar.

Zur Erzielung einer hinreichenden Beabstandung der pro Welle paarweise vorgesehenen Radiallager bzw. Radial und Radial-/Axiallager sollte eine Anordnung derselben beidseits der zugeordneten Zahnräder erfolgen. Durch diese Maßnahme lässt sich ein möglichst großer Lagerabstand realisieren, welcher dem schädigenden Einfluss von Kippmomenten entgegenwirkt.

Nach einer bevorzugten Ausführungsvariante wird vorgeschlagen, dass die Stirnräder in Getriebelängsrichtung gesehen derart angeordnet sind, dass sich bezüglich nur einer Querachse ein symmetrischer Aufbau ergibt. Durch diesen teilweise symmetrischen Aufbau wird ein gangbarer Kompromiss zwischen Kompaktheit in Richtung Querachse und symmetrischer Lastaufteilung bei der Leistungsverzweigung erzielt.

Sollte gemäß einer anderen Ausführungsvariante ein in Richtung beider Querachsen (bezüglich Getriebelängsachse) kompakter Aufbau gewünscht sein, so wird vorgeschlagen, dass die Stirnräder derart angeordnet sind, dass sich bezüglich beider Querachsen ein symmetrischer Aufbau ergibt. Als Getriebelängsrichtung gilt die Verlaufsrichtung der Wellen.

Gemäß einer weiteren Ausführungsvariante wird zur Erzielung einer maximal dichten Zahnradanordnung vorgeschlagen, eine Anzahl von maximal 6 Zahnritzeln mit dem rotorseitigen Zentralstirnrad in Eingriff zu bringen, welche äquidistant zueinander auf dem Umfang des Zentralstirnrades angeordnet sind. Bei dieser Ausführungsvariante sind die Stirnräder bezüglich beider Querachsen symmetrisch angeordnet. Vorteilhafterweise ergibt sich durch diese Getriebekonfiguration ein Optimum aus erforderlichen Einzelbauteilen und übertragbare Getriebeleistung bei einem möglichst kompakten Aufbau.

Die erfindungsgemäße Lösung ermöglicht es, dass die antriebsseitige Welle vorzugsweise koaxial zur abtriebsseitigen Welle verläuft, um günstige Voraussetzungen für eine räumlich kompakte Anordnung des Windkraftgetriebes im Zusammenspiel mit dem Rotor und dem Generator innerhalb der Gondel einer Windkraftanlage zu schaffen. Daneben ist es auch möglich, eine achsversetzte Anordnung von antriebsseitiger Welle und abtriebsseitiger Welle zu bilden, indem die abtriebsseitige Welle mit einer weiteren Getriebestufe, bestehend aus einer Stirnradpaarung, versehen wird. Somit ist die erfindungsgemäße Lösung flexibel an vorgegebene bauliche Randbedingungen anpassbar. Beide Anordnungen ermöglichen es, erforderliche Steuerleitungen - beispielsweise für die Rotorblattverstellung - der Windkraftanlage unterzubringen.

Gemäß einer die Erfindung verbessernden Maßnahme wird vorgeschlagen, dass die Wellen der mit dem Zentralstirnrad in Eingriff stehenden Zahnritzel als Hohlwellen ausgeführt sind, wobei stirnseitig mit einem hierdurch verlaufenden Quillschaft das Drehmoment an die nachfolgende Getriebestufe schwingungsgedämpft übertragen wird. Durch die Gestaltung als Hohlwelle kann die Länge des Quillschaftes maximiert werden, so dass dieser eine entsprechend ausreichende elastische Torsion gewährleistet. Die hierdurch erreichte Lastaufteilung ist wesentlich gleichmäßiger als bei den Planeten vergleichbarer Stückzahl in Planetengetrieben des Standes der Technik, welche als Windkraftgetriebe zum Einsatz kommen. Bei diesen müssen nämlich aufgrund der unvermeidbaren Fertigungsabweichungen erhebliche Abschläge der anteiligen Lastaufteilung in Kauf genommen werden. Die Abschläge in der Tragfähigkeit der Verzahnung sind umso größer, je mehr Planeten vorhanden sind.

Es wird vorgeschlagen, den Quillschaft über einen konischen Pressverband lösbar mit einer korrespondierenden Nabe des Zahnritzels zu verbinden, um eine einfache Getriebedemontage zwischen der Ebene des Zentralstirnrades und den Ebenen der nachgeschalteten Getriebestufen zu gewährleisten. Über den konischen Pressverband lässt sich auch in einfacher Weise die Zahnradanlage in den Leistungszweigen einstellen.

Das vorstehend beschriebene erfindungsgemäße Windkraftgetriebe lässt sich vorteilhafterweise innerhalb eines Antriebsstrangs einer Windkraftanlage höherer Leistung verwenden, der eingangsseitig von einem Rotor zur Umwandlung von Wind in eine Drehbewegung einer antriebsseitigen Welle beaufschlagt ist, welche die Drehbewegung in ein mehrstufiges Stirnradgetriebe zur Übersetzung ins Schnelle einleitet, dessen abtriebsseitige Welle an ein Generator zur Umwandlung der Bewegungsenergie in Elektroenergie angeschlossen ist. Von Vorteil ist es hierbei, wenn zwischen dem Rotor und dem Windkraftgetriebe eine zusätzliche Bremse angeordnet ist, um ein Aufziehen des Windkraftgetriebes durch im Stillstand über den Rotor wirkende Wechselmomente zu vermeiden. Denn theoretische Untersuchungen haben gezeigt, dass das Antriebssystem hierbei insbesondere das mehrstufige Windkraftgetriebe sich als Federsystem verhält. Dieses Federsystem zieht sich bei Windstößen auf und entspannt sich danach wieder. Hierdurch treten die eingangs beschriebenen problemverursachenden Lastwechsel in den Verzahnungen auf.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine schematische Draufsicht auf ein leistungsverzweigtes Windkraftgetriebe mit koaxialer Anordnung von antriebsseitiger zu abtriebsseitiger Welle,
- Fig. 2: ein Räderschema eines Windkraftgetriebes mit 6 Zahnritzeln,
- Fig. 3: ein Räderschema eines Windkraftgetriebes mit 4 Zahnritzeln und einfach symmetrischem Aufbau,
- Fig. 4: ein Räderschema eines Windkraftgetriebes mit 4 Zahnritzeln und doppelt symmetrischem Aufbau,
- Fig. 5: eine Seitenansicht eines Windkraftgetriebes mit einem Räderschema nach Fig. 4 in einer ersten Darstellungsform,
- Fig. 6: eine Seitenansicht eines Windkraftgetriebes mit einem Räderschema nach Fig. 4 in einer zweiten Darstellungsform,
- Fig. 7: ein Räderschema eines Windkraftgetriebes mit 2 Zahnritzeln und achsversetzter Anordnung von antriebsseitiger zu abtriebsseitiger Welle, und
- Fig. 8: eine schematische Darstellung eines Antriebsstrangs, enthaltend ein mehrstufiges leistungsverzweigtes Windkraftgetriebe.

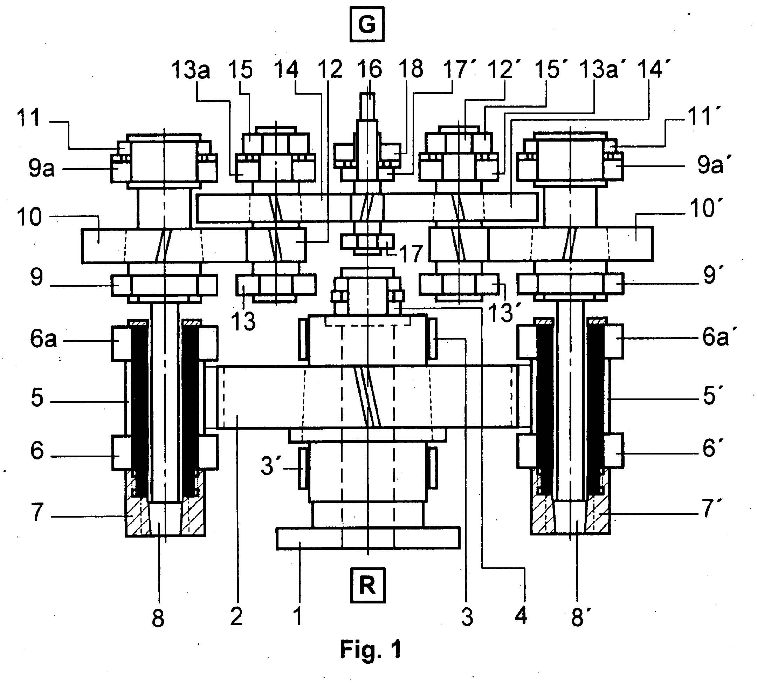

Gemäß Fig. 1 treibt die an einem Rotor R angekoppelte antriebsseitige Welle 1 ein Zentralstirnrad 2 der ersten Getriebestufe an. Die Welle 1 ist in diesem Ausführungsbeispiel gelagert in zwei beabstandet zueinander entlang der Welle 1 angeordnete reine Radiallager 3, 3'. Die Axialkraft aus der Schrägverzahnung des Zentralstirnrads 2 wird durch ein separat stirnseitig der Welle 1 angeordnetes Axiallager 4 aufgenommen. Das Zentralstirnrad 2 größeren Durchmessers steht mit mehreren Zahnritzeln 5, 5' in Eingriff und bildet somit die erste Getriebestufe. Die Zahnritzel 5, 5' dienen der Leistungsverzweigung und sind in Übereinstimmung mit dem Zentralstirnrad 2 schrägverzahnt. Die Zahnritzel 5, 5' sind als Hohlwelle ausgeführt und besitzen stirnseitig jeweils eine Nabe 7, bzw. 7', über welche jeweils eine als Quillschaft ausgeführte Welle 8 bzw. 8' mittels leicht konischer Presspassung gekoppelt sind. Die als Quillschaft ausgebildeten Wellen 8 und 8' übertragen das Drehmoment an die folgende Getriebestufe schwingungsgedämpft weiter. Die Zahnritzel 5 und 5' sind hier ebenfalls über jeweils zwei beabstandet zueinander angeordnete Radiallager 6, 6a bzw. 6', 6a' gelagert. Die Axiallagerung übernehmen die seitens der nachfolgenden Getriebestufe koaxial angeordneten Axiallager 11, bzw. 11'. Die Zahnräder 10 und 10' der nachfolgenden Getriebestufe sind über deren Wellen 8 bzw. 8' ebenfalls über beidseits der Stirnräder 10 und 10' angeordnete Radiallager 9, 9a bzw. 9', 9a' gelagert. In den Radiallagern 9, 9a bzw. 9', 9a' sind die Stirnräder 10 und 10' der zweiten Getriebestufe gelagert, welche - ebenfalls über Schrägverzahnung - jeweils auf Ritzel der nachfolgenden Wellen 12 bzw. 12' abrollen. Auch die Wellen 12 und 12' sind über je 2 Radiallager 13, 13a bzw. 13', 13a' radial gelagert, wogegen die axiale Lagerung über je stirnseitig der Wellen 12 und 12' angeordnete Axiallager 15 bzw. 15' erfolgt. Auf die Wellen 12 und 12' ist jeweils ein weiteres Stirnrad 14 bzw. 14' aufgeschrumpft, die mit einem gemeinsamen Abtriebsritzel der abtriebsseitigen Welle 16 kämmen. Hierdurch wird die Leistungsverzweigung wieder auf den gemeinsamen Abtrieb zurückgeführt. Auch die abtriebsseitige Welle 16 ist über 2 Radiallager 17 und 17' gelagert, wogegen die Axiallagerung über ein Axiallager 18 erfolgt. Die abtriebsseitige Welle 16 steht mit dem Generator G zur Erzeugung von elektrischer Energie in Verbindung. Die abtriebsseitige Welle 16 verläuft in diesem Ausführungsbeispiel koaxial zur antriebsseitigen Welle 1.

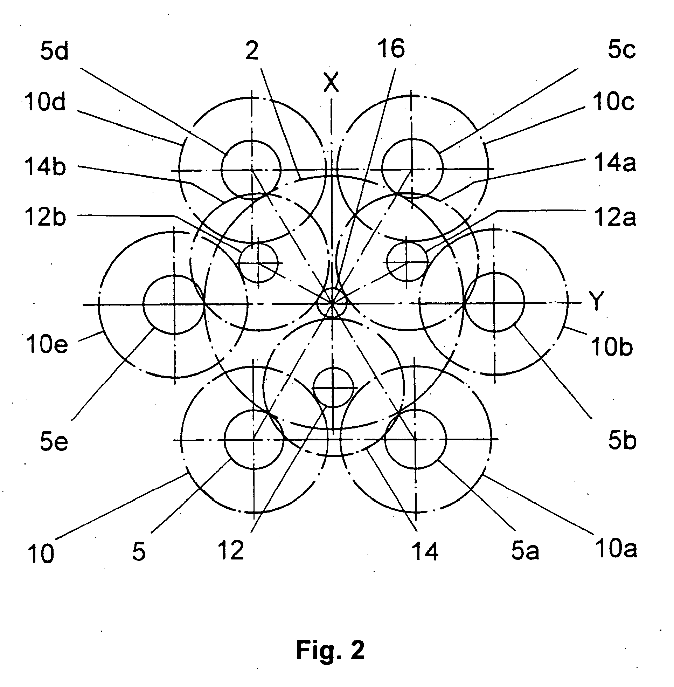

Gemäß Fig. 2 sind die mit dem Zentralstirnrad 2 kämmenden 6 Stirnräder 10 bis 10e in Getriebelängsrichtung derart angeordnet, dass sich bezüglich beider Querachsen X und Y ein symmetrischer Aufbau ergibt. Die 6 mit den Stirnrädern 10 bis 10e drehfest verbundenen Zahnritzel 5 bis 5e kämmen mit dem Zentralstirnrad 2. Dagegen kämmen die Stirnräder 10 bis 10e abtriebsseitig mit den drei Ritzeln 12 bis 12b der nachfolgenden Getriebestufe, welche wiederum drehfest mit den Stirnrädern 14 bis 14b verbunden sind. Die Stirnräder 14 bis 14b stehen mit der einzigen abtriebsseitigen Welle 16 in Eingriff.

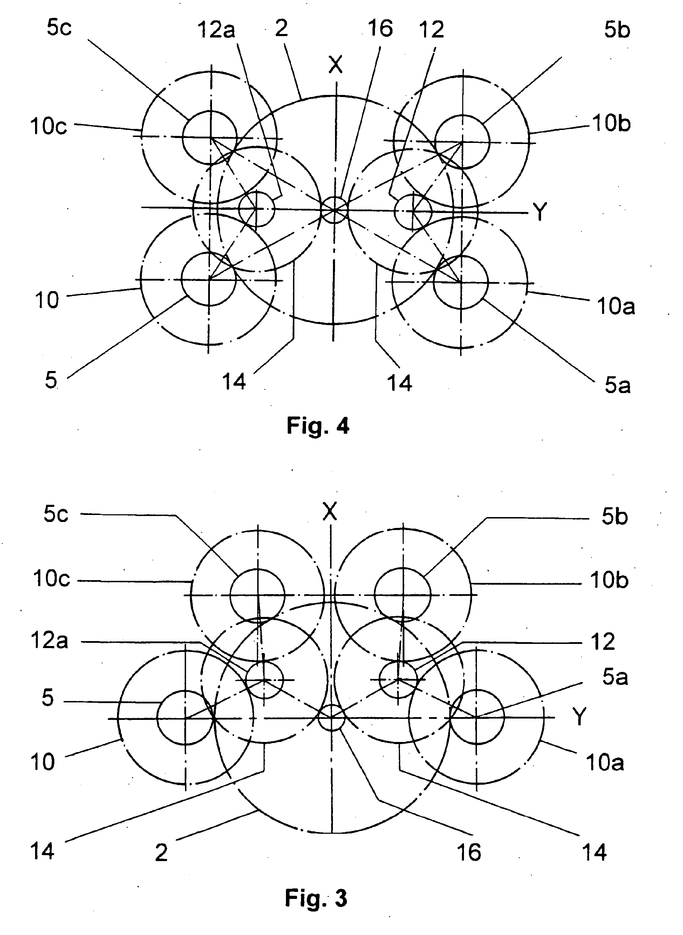

Gemäß Fig. 3 sind die hier verwendeten 4 Stirnräder 10 bis 10c in Getriebelängsrichtung derart angeordnet, dass sich bezüglich der Querachse X ein symmetrischer Aufbau ergibt; bezüglich der anderen Querachse Y ist der Aufbau unsymmetrisch. Die hier mit den besagten Stirnrädern 10 bis 10c drehfest verbundenen Zahnritzel 5 bis 5c kämmen zur Leistungsverzweigung mit dem Zentralstirnrad 2. Die Anordnung der beiden Zahnritzeln 5b und 5c zu einer Seite der anderen Zahnritzel 5 und 5a hin gewährleistet einen in Verlaufsrichtung der Querachse X gedrungenen Aufbau, welcher bei entsprechenden baulichen Randbedingungen zu bevorzugen ist. Die Stirnräder 10a und 10b stehen im Eingriff mit einem einzigen Zahnritzel der Welle 12, wogegen die anderen beiden Stirnräder 10 und 10c mit einem Ritzel der Welle 12a kämmen. Auf den Wellen 12 und 12a ist jeweils ein weiteres Stirnrad angeordnet, die beide mit einem Ritzel der Abtriebswelle 16 in Eingriff stehen.

Gemäß Fig. 4 sind die Stirnräder 10 bis 10e in Getriebelängsrichtung derart angeordnet, dass sich bezüglich beider Querachsen X und Y ein vollständig symmetrischer Aufbau ergibt. Diese Anordnung gewährleistet einen gleichmäßigen Kräfteverlauf bei einer vierfachen Leistungsverzweigung. Das Zentralstirnrad 2 steht mit den 4 Zahnritzeln 5 bis 5c in Eingriff und die ortsfest hierzu angeordneten Stirnräder 10 bis 10c stehen paarweise mit Ritzeln auf den Wellen 12 und 12a in Eingriff. Die beiden Wellen 12 und 12a sind wiederum mit einem Stirnrad ausgestattet, welches diametral in ein Zahnritzel seitens der abtriebsseitigen Welle 16 zum Eingriff kommt.

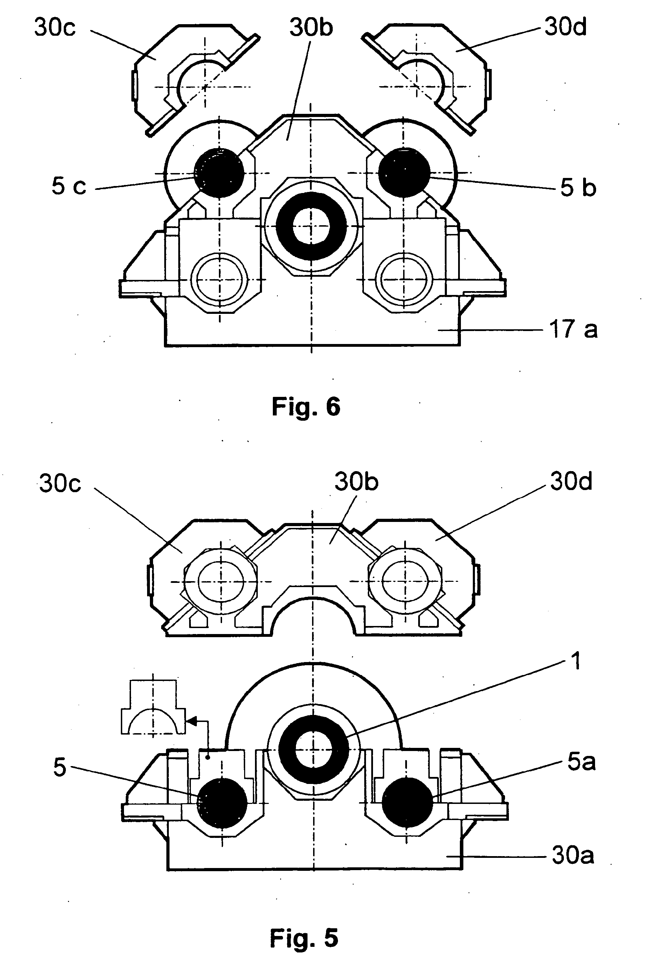

Fig. 5 verdeutlicht eine Teilfugenanordnung für ein Getriebegehäuse, welches für das vorstehend beschriebene vierfach leistungsverzweigte, vollständig symmetrische Windkraftgetriebe verwendbar ist. Das Getriebegehäuse besteht im wesentlichen aus vier Gehäuseteilen 30a bis 30d. Die antriebsseitige Welle 1 ist zentral angeordnet. Eine Teilfuge zwischen dem Getriebeteil 30a und dem Getriebeteil 30b macht u.a. die beiden unteren Zahnritzel 5 und 5a zugänglich.

Gemäß Fig. 6 macht eine Teilfuge zwischen dem Getriebeteil 30b und zwei weiteren oben liegenden Getriebeteilen 30c und 30d u.a. die beiden oberen Zahnritzel 5b und 5c zugänglich.

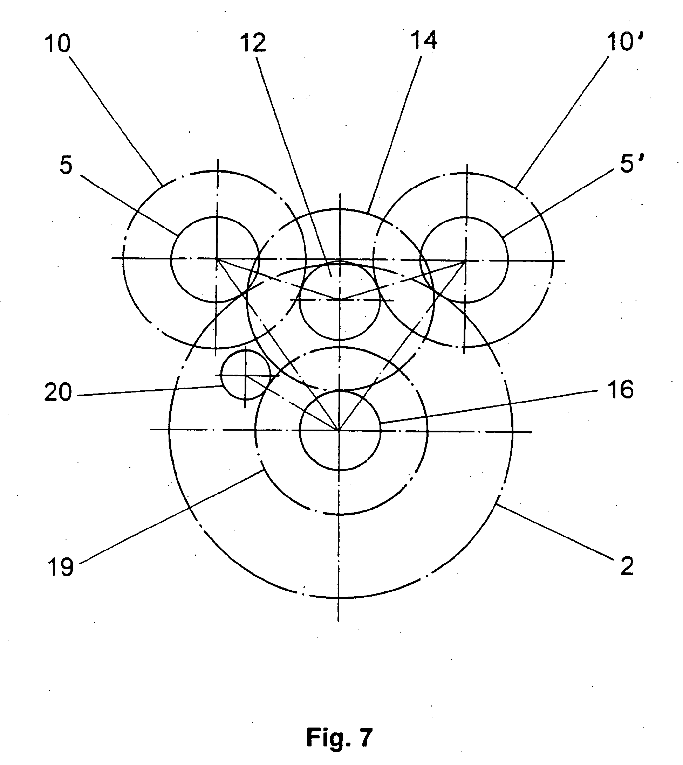

Die Fig. 7 stellt ein Ausführungsbeispiel für ein einfach leistungsverzweigtes Windkraftgetriebe dar, dessen Zentralstirnrad 2 mit zwei Zahnritzeln 5, 5' kämmt, deren ortsfest hierzu angeordneten Stirnräder 10 und 10' auf ein gemeinsames Zahnritzel einer Welle 12 gehen. Auf der Welle 12 ist wiederum ein weiteres Stirnrad 14 der nachfolgenden Getriebestufe angeordnet, dass auf einem koaxial zum Zentralstirnrad 2 angeordneten Zahnritzel auf der Welle 16 abrollt. Zur Erzielung einer achsversetzten Anordnung von Antriebs- zur Abtriebswelle ist eine weitere Getriebestufe, bestehend aus dem Stirnrad 19 und einem korrespondierenden Zahnritzel seitens der abtriebsseitigen Welle 20 vorgesehen.

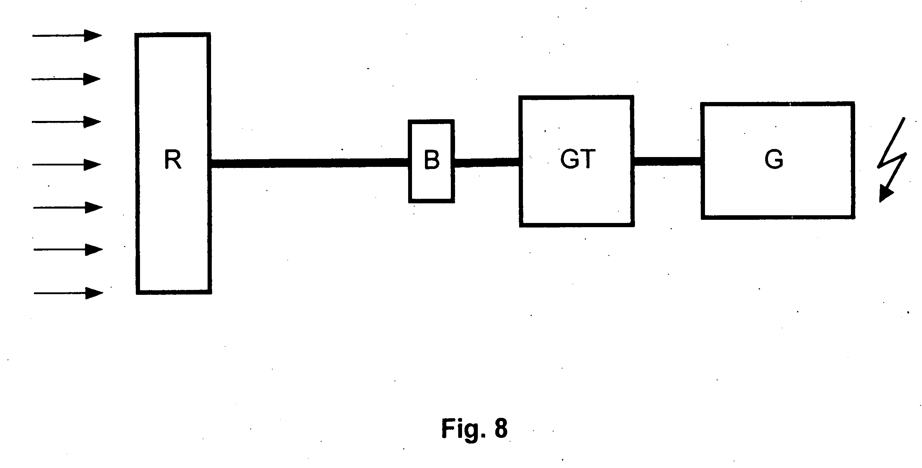

Gemäß Fig. 8 besteht der Antriebsstrang einer Windkraftanlage höherer Leistung, in welchen das erfindungsgemäße mehrstufige, leistungsverzweigte Windkraftgetriebe GT in Stirnradbauweise integriert ist, in Kraftflussrichtung gesehen, aus einem Rotor R zur Umwandlung von Wind in eine Drehbewegung. Dem Rotor R folgt eine Bremse B. Die Bremse B dient hier als Festhaltebremse im Antriebsstrang, um das nachgeschaltete Windkraftgetriebe GT zusätzlich vor den eingangs beschriebenen Lastwechseln im Stillstand zu schützen. Denn der Antriebsstrang - insbesondere das Windkraftgetriebe GT - verhält sich als Federsystem. Dieses Federsystem zieht sich bei Windstößen auf und entspannt sich danach wieder. Hierdurch treten die beschriebenen Lastwechsel in den Verzahnungen des Windkraftgetriebes GT auf, welche zu vermeiden sind. Dem Windkraftgetriebe GT folgt ein Generator G zur Umwandlung der Bewegungsenergie in Elektroenergie.

## Patentansprüche

1. Mehrstufiges, leistungsverzweigtes Windkraftgetriebe in Stimradbauweise, das zur Übersetzung ins Schnelle zwischen Rotor (R) und Generator (G) einer Windkraftanlage angeordnet ist, dessen Getriebestufen aus achsparallelen Außenradpaarungen mit schrägverzahnten Stirnrädern (2, 10, 10', 14, 14') aufgebaut sind, wobei zur Leistungsverzweigung mehrere Zahnritzel (5, 5') mit einem rotorseitigen Zentralstirnrad (2) größeren Durchmessers in Eingriff stehen, denen jeweils mindestens eine weitere Getriebestufe nachgeschaltet ist, welche die Leistung auf eine einzige generatorseitige Welle (16) zusammenführen,
**dadurch gekennzeichnet, dass** sämtliche Stirnräder (2, 10, 10', 14, 14') einfach schrägverzahnt sind und die Lagerung der die Stirnräder (2, 10, 10', 14, 14') tragenden Wellen (1,8, 8', 12, 12', 16) derart getrennt ausgeführt ist, dass neben einer mindestens zweifachen Radiallagerung auch Mittel zur Axiallagerung der Wellen (1,8,8', 12, 12', 16) vorgesehen sind, wobei die Radiallagerung über jeweils mindestens zwei entlang der Wellen (1; 5, 5'; 8, 8'; 12, 12'; 16) zueinander beabstandet angeordnete reine Radiallager (3, 3'; 6, 6a; 6', 6a'; 9, 9a; 9', 9a'; 13, 13a; 13', 13a'; 17, 17') erfolgt, wogegen als Mittel zur Axiallagerung jeweils mindestens ein stirnseitig der Wellen (1; 8, 8', 12, 12', 16) angeordnetes reines Axiallager (4; 11; 11'; 15; 15'; 18) vorgesehen ist.

2. Mehrstufiges, leistungsverzweigtes Windkraftgetriebe nach Anspruch 1,
**dadurch gekennzeichnet, dass** zur Axiallagerung genau ein Axiallager (4; 11; 11'; 15; 15'; 18) pro Welle (1; 8, 8', 12, 12', 16) vorgesehen ist.

3. Mehrstufiges, leistungsverzweigtes Windkraftgetriebe nach Anspruch 1,
**dadurch gekennzeichnet, dass** zur Übertragung einer Leistung im Bereich von 4 bis 6 Megawatt eine Anzahl von 2 bis 3 Zahnritzel (5, 5') mit dem rotorseitigen Zentralstirnrad (2) im Eingriff stehen, um eine hinreichende Leistungsverzweigung zu gewährleisten.

4. Mehrstufiges, leistungsverzweigtes Windkraftgetriebe nach Anspruch 1 oder 3,
**dadurch gekennzeichnet, dass** zur Übertragung einer Leistung im Bereich von 4 bis 6 Megawatt 3 bis 4 Getriebestufen mit einem Gesamtübersetzungsverhältnis im Bereich von 60 bis 120, vorzugsweise 70 bis 100, vorgesehen sind.

5. Mehrstufiges, leistungsverzweigtes Windkraftgetriebe nach Anspruch 1,
**dadurch gekennzeichnet, dass** zur hinreichenden Beabstandung der pro Welle (1; 8, 8', 12, 12', 16) paarweise vorgesehenen Radiallager (3, 3'; 6, 6a; 6', 6a'; 9, 9a; 9', 9a'; 13; 13';13a, 13a'; 17, 17') eine Anordnung derselben beidseits der zugeordneten Stirnräder (2) erfolgt.

6. Mehrstufiges, leistungsverzweigtes Windkraftgetriebe nach Anspruch 1,
**dadurch gekennzeichnet, dass** die Stirnräder (10-10c) in Getriebelängsrichtung derart angeordnet sind, dass sich bezüglich nur einer Querachse (X) ein symmetrischer Aufbau ergibt.

7. Mehrstufiges, leistungsverzweigtes Windkraftgetriebe nach Anspruch 1,
**dadurch gekennzeichnet, dass** die Stirnräder (10-10e) in Getriebelängsrichtung derart angeordnet sind, dass sich bezüglich beider Querachsen (X, Y) ein symmetrischer Aufbau ergibt.

8. Mehrstufiges, leistungsverzweigtes Windkraftgetriebe nach Anspruch 1,
**dadurch gekennzeichnet, dass** die antriebsseitige Welle (1) koaxial zur abtriebsseitigen Welle (16) verläuft.

9. Mehrstufiges, leistungsverzweigtes Windkraftgetriebe nach Anspruch 1,
**dadurch gekennzeichnet, dass** zur Erzielung einer achsversetzten Anordnung von antriebsseitiger Welle (1) zur abtriebsseitigen Welle (16), die abtriebsseitige Welle (16) mit einer weiteren Getriebestufe (19-20) versehen ist.

10. Mehrstufiges, leistungsverzweigtes Windkraftgetriebe nach Anspruch 7,
**dadurch gekennzeichnet, dass** eine Anzahl von maximal 6 Zahnritzel (5-5e) mit dem rotorseitigen Zentralstirnrad (2) im Eingriff stehen, welche äquidistant zueinander auf dem Umfang des Zentralstirnrads (2) angeordnet sind, um eine maximal dichte Zahnradanordnung zu bilden.

11. Mehrstufiges, leistungsverzweigtes Windkraftgetriebe nach Anspruch 1,
**dadurch gekennzeichnet, dass** die Zahnritzel (5, 5') als Hohlwelle ausgeführt ist und stirnseitig mit einem hierdurch verlaufenden und als Quillschaft ausgebildeten Welle (8, 8') verbunden ist, der das Drehmoment an die folgende Getriebestufe schwingungsgedämpft überträgt.

12. Mehrstufiges, leistungsverzweigtes Windkraftgetriebe nach Anspruch 11,
**dadurch gekennzeichnet, dass** die als Quillschaft ausgebildete Welle (8; 8') über einen konischen Pressverband lösbar mit einer korrespondierenden Nabe des Zahnritzels (5;5') verbunden ist, um eine Getriebedemontage zwischen der Ebene des Zentralstirnrads (2) und den Ebenen der nachgeschalteten Getriebestufen zu gewährleisten.

13. Antriebsstrang einer Windkraftanlage höherer Leistung, der eingangsseitig von einem Rotor (R) zur Umwandlung von Wind in eine Drehbewegung einer antriebsseitigen Welle (1) beaufschlagt ist, welche die Drehbewegung in ein mehrstufiges Stirnradgetriebe zur Übersetzung ins Schnelle einleitet, an dessen abtriebsseitige Welle (16) ein Generators (G) zur Umwandlung der Bewegungsenergie in Elektroenergie angeschlossen ist,
**dadurch gekennzeichnet, dass** das Stirnradgetriebe als ein Windkraftgetriebe nach einem der vorstehenden Ansprüche ausgebildet ist.

14. Antriebsstrang nach Anspruch 13,
**dadurch gekennzeichnet, dass** zwischen dem Rotor (R) und dem Windkraftgetriebe (GT) eine Bremse (B) angeordnet ist, um ein Aufziehen des Windkraftgetriebes (GT) durch im Stillstand über den Rotor (R) einwirkende Wechselmomente zu vermeiden.

## Claims

1. A multi-stage power-distributed wind turbine transmission of a spur-gear construction, arranged for a speed increase between a rotor (R) and a generator (G) of a wind turbine generator system, having transmission stages constructed of axis-parallel external gear pairings with helically toothed spur gears (2, 10, 10', 14, 14'), wherein for power distribution a plurality of pinions (5, 5') are in engagement with a rotor-side central spur gear (2) of greater diameter, each having at least one further transmission stage downstream of them, which combine the power on a single generator-side shaft (16),
**characterised in that** all spur gears (2, 10, 10', 14, 14') have simple helical toothing and the bearings of the shafts (1, 8, 8', 12, 12', 16) carrying the spur gears (2, 10, 10', 14, 14') are separately formed in such a way that, apart from an at least two-fold radial bearing, means for axially bearing the shafts (1, 8, 8', 12, 12', 16) are also provided, wherein the radial bearing is by means of at least two purely radial bearings (3, 3'; 6, 6a; 6', 6a'; 9, 9a; 9', 9a'; 13, 13a; 13', 13a'; 17, 17') spaced with respect to each other along each shaft (1; 5, 5'; 8, 8'; 12, 12'; 16), whereas at least one purely axial bearing (4; 11; 11'; 15; 15'; 18) is provided arranged at the end face of each of the shafts (1; 8, 8', 12, 12', 16) as a means for axial bearing.

2. The multi-stage power-distributed wind turbine transmission according to claim 1, **characterised in that** for axial bearing, exactly one axial bearing (4; 11; 11'; 15; 15'; 18) is provided per shaft (1; 8, 8', 12, 12', 16).

3. The multi-stage power-distributed wind turbine transmission according to claim 1, **characterised in that** for transmitting a power in the range of 4 to 6 megawatts, a number of 2 to 3 pinions (5, 5') are in engagement with the rotor-side central spur gear (2) to ensure sufficient power distribution.

4. The multi-stage power-distributed wind turbine transmission according to claim 1 or 3, **characterised in that** for transmitting a power in the range of 4 to 6 megawatts, 3 to 4 transmission stages are provided with an overall gear ratio in the range of 60 to 120, preferably 70 to 100.

5. The multi-stage power-distributed wind turbine transmission according to claim 1, **characterised in that** for sufficient spacing of the radial bearings (3, 3'; 6, 6a; 6', 6a'; 9, 9a; 9', 9a'; 13; 13'; 13a, 13a'; 17, 17') provided in pairs per shaft (1; 8, 8', 12, 12', 16), they are arranged on both sides of the associated spur gears (2).

6. The multi-stage power-distributed wind turbine transmission according to claim 1, **characterised in that** the spur gears (10-10c) are arranged in the longitudinal direction of the transmission in such a way that a symmetrical structure results with respect to only one transverse axis (X).

7. The multi-stage power-distributed wind turbine transmission according to claim 1, **characterised in that** the spur gears (10-10e) are arranged in the longitudinal direction of the transmission in such a way that a symmetrical structure results with respect to both transverse axes (X, Y).

8. The multi-stage power-distributed wind turbine transmission according to claim 1, **characterised in that** the input-side shaft (1) extends coaxially with the output-side shaft (16).

9. The multi-stage power-distributed wind turbine transmission according to claim 1, **characterised in that** for achieving an axis-offset arrangement of the input-side shaft (1) with respect to the output-side shaft (16), the output-side shaft (16) is provided with a further transmission stage (19-20).

10. The multi-stage power-distributed wind turbine transmission according to claim 7, **characterised in that** a number of no more than 6 pinions (5-5e) are in engagement with the rotor-side central spur gear (2), which are equidistant from each other on the circumference of the central spur gear (2) to ensure a maximally dense gear arrangement.

11. The multi-stage power-distributed wind turbine transmission according to claim 1, **characterised in that** the pinions (5, 5') are formed as hollow shafts and coupled to a shaft (8, 8') extending therethrough and formed as a quill shaft, which transmits the torque to the following transmission stage in a vibration-damped manner.

12. The multi-stage power-distributed wind turbine transmission according to claim 11, **characterised in that** the shaft (8; 8') formed as a quill shaft is releasably coupled to a corresponding hub of the pinion (5; 5') via a conical pressure fit in order to allow assembly of the transmission between the plane of the central spur gear (2) and the planes of the downstream transmission stages.

13. A drive train of a higher-power wind turbine generator system, having power applied to it by a rotor (R) for transforming wind into a rotary movement of an input-side shaft (1), which feeds the rotary movement into a multi-stage spur-gear transmission for speed increase, and having an output-side shaft (16) to which a generator (G) is coupled for converting the kinetic energy into electric energy,
**characterised in that** the spur-gear transmission is formed as a wind turbine transmission according to any one of the preceding claims.

14. The drive train according to claim 13,
**characterised in that** a brake (B) is arranged between the rotor (R) and the wind turbine transmission (GT) to avoid tensioning of the wind turbine transmission (GT) by moment reversals originating from the rotor (R) during standstill.

## Revendications

1. Transmission à plusieurs étages et à dérivation de puissance pour une installation éolienne, réalisée avec des engrenages droits, agencée pour la conversion de vitesse entre le rotor (R) et le générateur (G) d'une installation éolienne, dont les étages de transmission sont constitués par des paires de pignons extérieurs à axes parallèles avec des engrenages droits (2, 10, 10', 14, 14') à denture oblique, dans laquelle, pour la dérivation de puissance, plusieurs pignons (5, 5') sont en engrènement avec un engrenage droit central (2) de grand diamètre du côté rotor, à la suite desquels est agencé respectivement au moins un autre étage de transmission, et qui rassemblent la puissance sur un unique arbre (16) du côté du générateur,
**caractérisée en ce que** la totalité des engrenages droits (2, 10, 10', 14, 14') présentent des dentures obliques simples, et le montage des arbres (1, 8, 8', 12, 12', 16) qui portent les engrenages droits (2, 10, 10', 14, 14') est réalisé de manière séparée de telle façon que, en plus d'un montage radial au moins double, il est également prévu des moyens pour le montage axial des arbres (1,8, 8', 12, 12', 16), le montage radial ayant lieu respectivement via au moins deux paliers purement radiaux (3, 3' ; 6, 6a, 6', 6a' ; 9, 9a ; 9', 9a' ; 13, 13a, 13', 13a' ; 17, 17') agencés à distance l'un de l'autre le long des arbres (1, 8, 8', 12, 12', 16), tandis que, à titre de moyen pour le montage axial, il est prévu respectivement au moins un palier purement axial (4 ; 11 ; 11'; 15 ; 15' ; 18) agencé sur le côté frontal des arbres (1,8, 8', 12, 12', 16).

2. Transmission à plusieurs étages et à dérivation de puissance pour une installation éolienne, selon la revendication 1, **caractérisée en ce qu'**il est prévu exactement un palier axial (4 ; 11 ; 11'; 15 ; 15' ; 18) par arbre (1, 8, 8', 12, 12', 16) pour le montage axial.

3. Transmission à plusieurs étages et à dérivation de puissance pour une installation éolienne, selon la revendication 1, **caractérisée en ce que**, pour la transmission d'une puissance dans la plage de 4 à 6 mégawatts, il est prévu un nombre de 2 à 3 pignons (5, 5') qui engrènent avec l'engrenage droit central (2) du côté du rotor pour garantir une dérivation de puissance suffisante.

4. Transmission à plusieurs étages et à dérivation de puissance pour une installation éolienne, selon la revendication 1 ou 3, **caractérisée en ce que**, pour la transmission d'une puissance dans la plage de 4 à 6 mégawatts, il est prévu un nombre de 3 à 4 étages de transmission avec un rapport de transmission global dans la plage de 60 à 120, de préférence de 70 à 100.

5. Transmission à plusieurs étages et à dérivation de puissance pour une installation éolienne, selon la revendication 1, **caractérisée en ce que** pour écarter suffisamment les paliers radiaux (3, 3' ; 6, 6a, 6', 6a' ; 9, 9a ; 9', 9a' ; 13, 13a, 13', 13a' ; 17, 17') prévus par paires pour chaque arbre (1, 8, 8', 12, 12', 16), leur agencement est effectué sur les deux côtés des engrenages droits associés (2).

6. Transmission à plusieurs étages et à dérivation de puissance pour une installation éolienne, selon la revendication 1, **caractérisée en ce que** les engrenages droits (10-10c) sont agencés, dans la direction longitudinale de la transmission, de telle façon qu'il en résulte une structure symétrique par rapport à un seul axe transversal (X).

7. Transmission à plusieurs étages et à dérivation de puissance pour une installation éolienne, selon la revendication 1, **caractérisée en ce que** les engrenages droits (10-10e) sont agencés, dans la direction longitudinale de la transmission, de telle façon qu'il en résulte une structure symétrique par rapport aux deux axes transversaux (X, Y).

8. Transmission à plusieurs étages et à dérivation de puissance pour une installation éolienne, selon la revendication 1, **caractérisée en ce que** l'arbre du côté entraînement (1) s'étend coaxialement à l'arbre (16) du côté mené.

9. Transmission à plusieurs étages et à dérivation de puissance pour une installation éolienne, selon la revendication 1, **caractérisée en ce que**, pour atteindre un agencement avec déport axial de l'arbre du côté entraînement (1) par rapport à l'arbre du côté mené (16), l'arbre du côté mené (16) est pourvu d'un autre étage de transmission (19-20).

10. Transmission à plusieurs étages et à dérivation de puissance pour une installation éolienne, selon la revendication 7, **caractérisée en ce qu'**il est prévu un nombre maximum de 6 pignons (5-5e) en engrènement avec l'engrenage droit central (2) du côté rotor, ces pignons étant agencés de façon équidistante les uns par rapport aux autres sur la périphérie de l'engrenage droit central, pour former un agencement de pignons à densité maximum.

11. Transmission à plusieurs étages et à dérivation de puissance pour une installation éolienne, selon la revendication 1, **caractérisée en ce que** le pignon (5, 5') est réalisé sous la forme d'un arbre creux et est relié du côté frontal à un arbre (8, 8') qui le traverse et qui est réalisé sous la forme d'un arbre creux qui transmet le couple de rotation à l'étage de transmission suivant avec amortissement des oscillations.

12. Transmission à plusieurs étages et à dérivation de puissance pour une installation éolienne, selon la revendication 11, **caractérisée en ce que** l'arbre (8, 8') réalisé sous la forme d'un arbre creux est relié, via une liaison conique à la presse, de façon détachable à un moyeu correspondant du pignon (5 ; 5'), pour assurer un démontage de la transmission entre le plan de l'engrenage droit central (2) et le plan de l'étage de transmission successif.

13. Train d'entraînement d'une installation éolienne à haute puissance, attaqué du côté entré par un rotor (R) pour la conversion du vent en un mouvement de rotation d'un arbre (1) côté entraînement, et injectant le mouvement de rotation dans une transmission à engrenages droits à plusieurs étages pour la conversion de vitesse, avec un générateur (G) raccordé à son arbre (16) du côté mené pour la conversion de l'énergie de déplacement en énergie électrique,
**caractérisé en ce que** la transmission à engrenages droits est réalisée sous la forme d'une transmission selon l'une des revendications précédentes.

14. Train d'entraînement selon la revendication 13,
**caractérisé en ce qu'**un frein (D) est agencé entre le rotor (R) et la transmission (GT), pour éviter une sollicitation de la transmission (GT) par des couples variables agissant au repos via le rotor (R).
